# EUROPEAN PATENT SPECIFICATION

(11) **EP 3 403 795 B1**
(45) Date of publication and mention of the grant of the patent: **07.07.2021**
(21) Application number: 18172542.5
(22) Date of filing: 16.05.2018
(51) Int. Cl.: B27M 1/08, B23Q 1/03

(54) **MACHINE TOOL WITH A WORKPIECE HOLDER COMPRISING PARALLEL BEAMS AND MOTORIZED CARRIAGES MOVABLE ALONG SAID BEAMS**
WERKZEUGMASCHINE MIT EINER WERKSTÜCKAUFNAHME ENTHALTEND PARALLELE TRÄGER UND MIT MOTORIZIERTEN WAGEN, DIE ENTLANG DER BALKEN BEWEGBAR WERDEN
MACHINE-OUTIL AVEC UN PORTE-PIÈCE COMPRENANT DES POUTRES PARALLELLES ET DES CHARRIOTS MOTORISÉES MOBILES LE LONG DES DITES POUTRES

(30) Priority: 18.05.2017 IT 201700054051
(43) Date of publication of application: 21.11.2018
(73) Proprietor: PAOLINO BACCI S.R.L., 56021 Cascina (PI) (IT)
(72) Inventor: BACCI, Giuseppe, 56025 Pontedera (Pi) (IT); BACCI, Paolo, 56025 Pontedera (Pi) (IT); BACCI, Nino, 56025 Pontedera (Pi) (IT)
(74) Representative: Mannucci, Michele

(56) References cited:
- EP-A1- 0 507 033
- DE-A1-102004 043 697
- DE-A1-102008 016 159
- DE-C1- 10 009 026
- DE-U1-202015 102 943

## Description

### Technical Field

The invention relates to a machine tool according to the preamble of claim 1. Such a machine tool is known from DE 20 2015 102943 U1.

### Background art

For machining flat pieces made of various materials, for instance doors of pieces of furniture, panels or other articles, the use of numerically controlled machine tools, i.e. machining centers, is well known, which are provided with workpiece holders comprising a plurality of blocking members for blocking the workpieces, these blocking members defining a planar blocking surface for the workpieces. In normal use, the planar blocking surface is usually horizontal.

The workpieces are machined by means of at least one work head that can be equipped with at least one rotating tool. The work head and the workpiece holder or holders (if the machine has more workpiece holders) are movable relative to each other according to a plurality of numerically controlled axes, to allow performing multiple working cycles.

In machine tools of this type, usually three numerically controlled translation axes are provided, orthogonal to one another. Typically, two numerically controlled translation axes define a plane parallel to the workpiece blocking surface, and a third axis extends orthogonally to the planar blocking surface. In some cases, one or more numerically controlled rotary axes are provided to machine the workpiece according to different angles.

Machine tools for machining panels typically comprise workpiece holders, each of which comprises at least one pair of parallel and substantially coplanar beams.

Usually, at least two carriages are arranged on each beam, each carriage carrying workpiece blocking members. The position of the carriages along the beams can be adjusted according to the workpiece shape and dimension. Similarly, also the reciprocal distance of the beams can be adjusted in a direction orthogonal to the longitudinal dimension, i.e. orthogonal to the longitudinal extension of the beams.

EP-A-2361738, DE-U-202015004517, EP0507033 and EP102008016159 disclose examples of machine tools or machining centers and parts thereof. A machine tool according to the preamble of claim 1 is disclosed in DE202015102943.

EP-A-2371488 discloses a beam for a machine tool of the type described above, on which sliding carriages are mounted sliding, the carriages carrying blocking members, for example suction cups, for blocking the workpiece. The beam is shaped so as to define, with its upper surface, a guide for the carriages.

The set-up of this type of machine tool requires long time, due to the various adjustments mentioned above. The smaller the batch of workpieces machined with a given machine set-up, the more the time required for arranging the machine affects the overall machining time, and therefore the working costs. A batch is comprised of equal workpieces that shall be subjected to the same machining and that therefore require the same set-up of the machine tool.

In case of very small batches, comprised of only one or few workpieces, the set-up time greatly affects the overall time required for machining, resulting in higher production costs.

To speed up the set-up operations, the carriages are positioned along the beams by means of actuators controlled by a central control unit. In some known machine tools, a single actuator is provided to move more carriages, for examples by means of a belt, which selectively engages the carriages. This solution has some drawbacks, in particular as regards the accuracy of operation and positioning of the carriages. Moreover, the setting times are long, as the carriages shall be moved sequentially and cannot be positioned simultaneously.

A need therefore exists for improving the machine tools of the type described above to reduce or overcome one or more of the prior art drawbacks.

### Summary of the Invention

A machine tool according to the invention is defined by claim 1. The dependent claims relate to additional features and embodiments of machine tools according to the invention. The machine tool comprises at least one work head adapted to support at least one tool and at least one workpiece holder comprising at least two substantially parallel beams arranged at a distance adjustable orthogonally to the longitudinal extension of the beams. On each beam at least one carriage is advantageously provided, movable along the longitudinal extension of the beam and provided with a respective actuator controlling the movement of the carriage along the respective beam. The actuator is integrally movable with the carriage. Moreover, with each carriage a flexible member is associated, forming a guide containing cables for powering the actuator, data transmission cables, where necessary, and fluid ducts, where necessary, pressurized or under vacuum. The guide has two branches put over each other, parallel to each other and arranged on a side of the beam. The actuator of each carriage is arranged between the two overlying branches of the flexible member.

In this way, a particularly compact arrangement is provided and it is possible to reduce the vertical size of the beam, as well as the minimum distance between adjacent beams. This can be advantageous for increasing the stiffness of the structure, and therefore the machining accuracy as well as the flexibility in positioning the beams.

As will be described later on with reference to embodiments illustrated in the drawings, the lower branch of the guide can terminate with an end which is fixed with respect to the relevant beam. The upper branch of the guide can terminate with an end which is fixed with respect to the relevant carriage.

In some embodiments the upper branch is located in a position lower than the upper surface of the relevant beam.

In practical embodiments the flexible member, for example a cable-carrier, has a first end fastened to a point which is fixed with respect to the respective beam, and a second end fastened to the carriage. The upper and lower branches of the flexible member are arranged between the first end and the second end. The two branches may be joined by means of a curve formed by the flexible member. Moreover, the two branches have a length which varies according to the position of the carriage along the beam.

The guide formed by the flexible member has an upper surface, defined by the upwardly facing surface of the upper branch of the guide, and a lower surface, defined by downwardly facing surface of the lower branch of the guide. The actuator is contained between the upper surface of the upper branch and the lower surface of the lower branch of the guide. Practically, the actuator may be flush with the upper surface or the lower surface.

The flexible member is contained in a volume whose vertical dimension is defined by the outer parallel surfaces of the flexible member and whose width is defined by the size of the flexible member in a direction orthogonal to the longitudinal extension of the respective beam. The actuator is contained inside said volume.

Each actuator has a dimension, in the direction orthogonal to the longitudinal extension of the beam, equal to, or lower than, the width of the flexible member defining the guide. Practically, in a top view each actuator and the respective flexible member defining the guide are overlapped; in a top view the actuator is integrally contained in the width of the flexible member.

Each carriage may comprise an upper surface for mounting workpiece blocking members, said upper surface of the carriage being arranged at a height higher than the respective beam. Advantageously, the actuator moving the carriage along the beam is at a lower height than the upper surface of the carriage and is, according to the invention, completely housed, underneath said upper surface. In other terms, in a top view the actuator is, according to the invention completely contained, inside the footprint of the upper surface of the carriage, and underneath thereof.

According to the invention, each carriage comprises a first side panel extending from the upper surface laterally with respect to the respective beam, and the flexible member has such a width as to be contained between the beam and the first side panel of the carriage. In this way a structure is provided, which is particularly compact in transverse direction, i.e. in the direction orthogonal to the longitudinal extension of the beam.

Each actuator may be mounted on the first side panel of the respective carriage.

In some embodiments described herein, on each carriage a first carriage guiding shoe is arranged between the upper surface, the actuator and the first side panel of the carriage, which first shoe engages a respective first guide of the carriage fastened to the respective beam.

In embodiments described herein, each carriage may comprise a second side panel, opposite to the first side panel, the beam being arranged between the first side panel and the second side panel of the carriage. In some embodiments, to the second side panel a second guiding shoe for the carriage is fastened, which engages a second guide of the carriage fastened to the beam, on an side opposite the first guide of the carriage. The shoes may be attached to a main body of the carriage, or made in a single piece therewith.

In possible embodiments, each actuator comprises a pinion meshing with a first rack integral with the beam. The first rack may be mounted below the first guide of the carriage. In some embodiments, for example when more carriages, for instance three or four carriages, are provided on the beam, the beam may comprise a second rack integral with the same beam and mounted below the second guide of the carriage. In this case, when more than two carriages are provided on the beam, they can be so mounted that some pinions of the respective actuators mesh with the first rack and some other engage the second rack.

Different type of workpiece blocking members can be mounted on each carriage. In the examples described below, suction cups are provided. However, also other types of blocking members may be provided, for example mechanical blocking members, or hydraulic or pneumatic blocking members wherein hydraulic or pneumatic actuators activate pressing members for workpiece blocking.

Further advantageous features and embodiments of the machine tool are described below with reference to the attached drawing, and in the attached claims, forming an integral part of the present description.

### Brief description of the drawings

The invention shall be better understood by following the description and the accompanying drawing, which show non-limiting examples of embodiment of the invention. More in particular, in the drawing:
Fig. 1 is a front view, according to line I-I of Figs. 2 and 3, of an embodiment of a machine tool, or machining center;
Fig. 2 shows a section according to the line II-II of Figs. 1 and 3;
Fig. 3 shows a plan view according to III-III of Figs. 1 and 2;
Fig.3A shows a diagram of a carriage and a respective suction up of Fig.3, showing the possible angular positions that the suction cup can take relative to the carriage;
Fig.4 is a plan view of a panel to be machined by means of the machine tool of Figs. 1, 2 e 3;
Fig. 5 shows a section according to V-V of Fig. 4;
Fig.6 is a side view of an enlargement according to VI-VI of Figs. 1 and 3 of a beam with respective carriages and suction cups;
Fig. 7 is a front view according to VII-VII of Fig. 6;
Fig. 8 shows an enlarged cross-section according to line VIII-VIII of Fig. 6;
Fig. 9 is a schematic cross-section according to IX-IX of Fig. 8;
Fig.10 is a plan view of the machine tool in a particular set-up, according to line X-X of Fig.11;
Fig. 11 is a schematic view according to XI-XI of Fig. 10;
Fig. 12 is a schematic cross-section according to XII-XII of Fig. 8;
Figs.13A-13F show an exemplary diagram of the possible positioning of a suction cup of the type illustrated in Figs. 8 and 12 on the beam and of the possible positions of the suction cup that can be set by rotating it; and
Figs. 14 and 15 show a diagram of a machine tool with a movable work head and fixed beams, wherein Fig.14 is a plan view according to XIV-XIV of Fig.15 and Fig.15 is a side view according to XV-XV of Fig.14.

### Detailed description of embodiments

The detailed description below of exemplary embodiments is made with reference to the attached drawing. The same reference numbers in different drawings identify equal or similar elements. Moreover, the drawings are not necessarily to scale. The detailed description below does not limit the invention. The protective scope of the present invention is defined by the attached claims.

In the description, the reference to "an embodiment" or "the embodiment" or "some embodiments" means that a particular feature, structure or element described with reference to an embodiment is comprised in at least one embodiment of the described object. The sentences "in an embodiment" or "in the embodiment" or "in some embodiments" in the description do not therefore necessarily refer to the same embodiment or embodiments. The particular features, structures or elements can be furthermore combined in any adequate way in one or more embodiments.

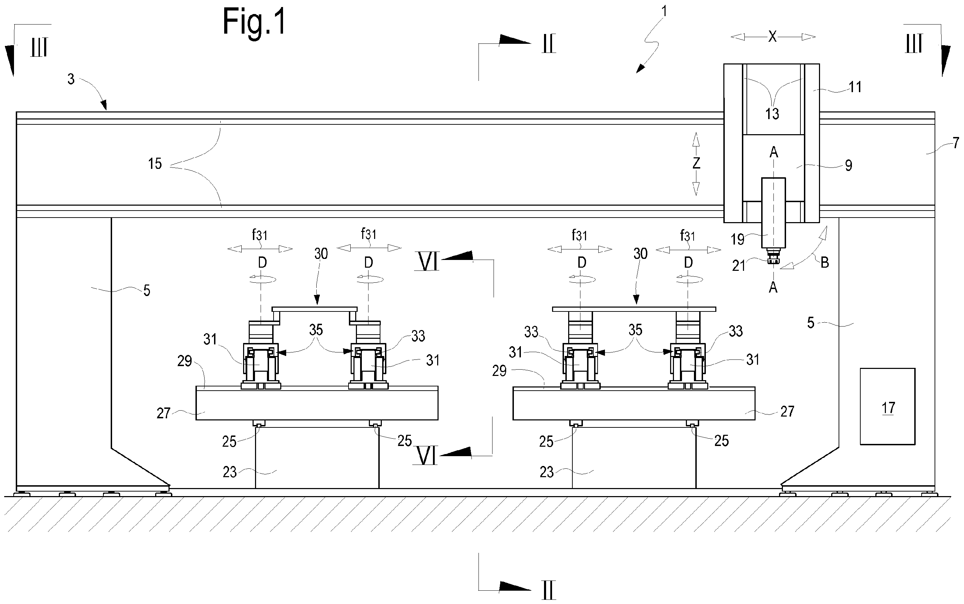

Figs. 1, 2 and 3 show three views of a machine tool or machining center in a possible embodiment. The machine tool is indicated as a whole with number 1. In the illustrated embodiment, the machine tool 1 is a gantry machine. It has a gantry 3 with uprights 5 and a crossbar 7. A work head or operating head 9 is mounted movable on the crossbar 7. The work head 9 may be mounted on a slide 11 by means of sliding guides 13 that are oriented vertically, i.e. orthogonally to the crossbar 7. The slide is movable along the crossbar 7 by means of sliding guides 15 parallel to the crossbar 7.

The work head 9 may be provided with a movement numerically controlled by a central control unit schematically indicated with 17. More in particular, the work head 9 may move according to a first numerically controlled translation axis X, parallel to the crossbar 7 and to the guides 15, and according to a second numerically controlled translation axis Z, vertical and parallel to the guides 13.

The work head 9 may bear one or more electro-spindles that can be provided with one or more rotating tools. In the diagram of Figs. 1, 2 and 3 only one electro-spindle 19 is shown, carrying a single tool 21, rotating around an axis A-A substantially parallel to the numerically controlled axis Z.

The gantry structure of the machine tool 1 described above is only one of the possible configurations of the machine tool. In further embodiments, the machine tool may have a column structure, wherein the work head is supported by a vertical upright that can be fixed or horizontally movable according to a numerically controlled axis X, and where the work head can be vertically movable according to a numerically controlled axis Z.

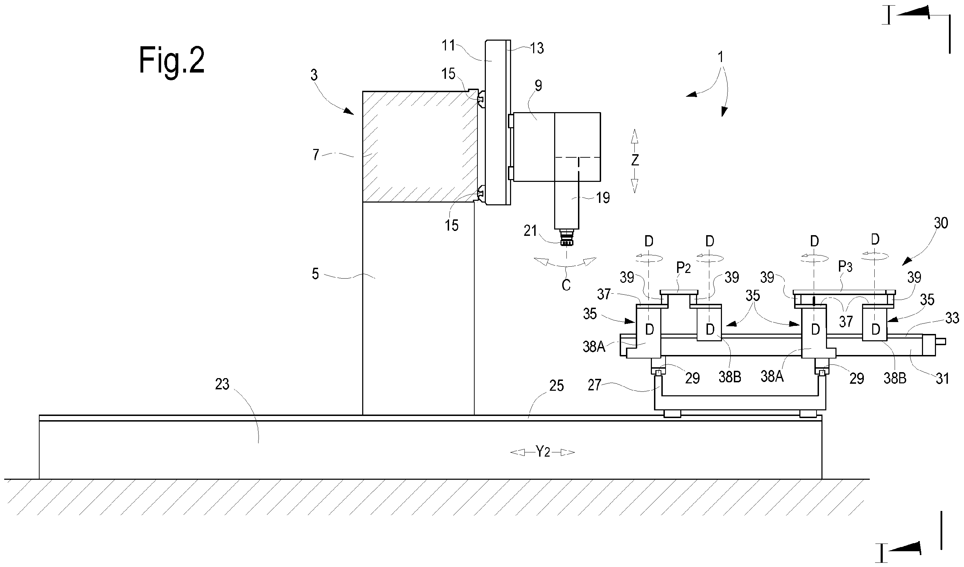

In the illustrated embodiment the work head 9 may be devoid of numerically controlled rotary axes. In further embodiments, the work head 9 may be provided with one or more, for instance two numerically controlled rotary axes. By means of these numerically controlled rotary axes it is possible to impart rotation movements to the electro-spindle 19, and therefore to the tool 21, according to the arrows B and C schematically shown in Figs. 1 and 2.

In some embodiments, one of which will be described below, the work head 9 may be adapted to move according to a third numerically controlled translation axis, orthogonal to the axes X and Z.

In the illustrated embodiment, two substantially parallel bases 23 are associated with the gantry 1. In other embodiments only one base may be provided. In the illustrated embodiment, each base 23 extends in horizontal direction substantially at 90° with respect to the crossbar 7, and extends below said crossbar.

In other embodiments, not shown, only one base 23 may be provided, which can be arranged substantially at the centerline of the gantry 3.

On each base 23 guides 25 may be provided, along which respective slides 27 move. The movement of each slide 27 may be controlled according to a third numerically controlled translation axis, indicated with Y1 and Y2 for the two slides 27.

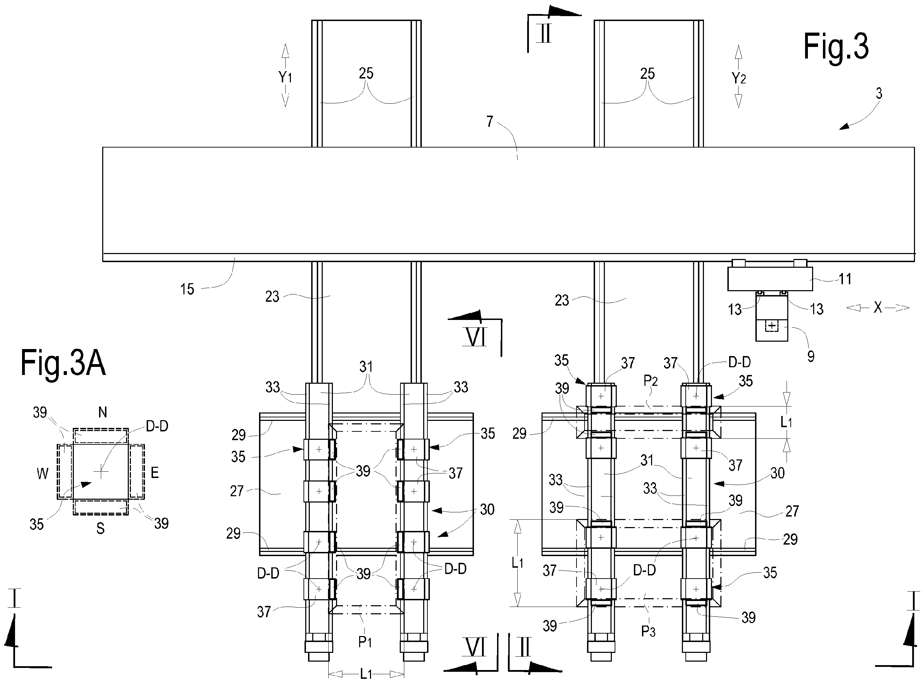

In some embodiments, the slides 27 are actuated according to a swinging cycle: when a slide 27 is in work position, in the work area of the work head 9, the other slide 27 is in a workpiece load and/or unload position, spaced from the work head 9. In Figs.2 and 3 the two slides are shown both in the load and/or unload position.

In the illustrated embodiment, on each slide 27 guides 29 are provided, that can be oriented at 90° with respect to the guides 25. In other embodiments, the guides 29 may be parallel to the guides 25.

In the illustrated embodiment, on the guides 29 of each slide 27 two beams 31 are provided, that have a longitudinal extension (i.e. the greater dimension) orthogonal to the guides 29. Each beam 31 is adjustable along the guides 29 according to the double arrows f31. In this way it is possible to adjust the position of the beams 31 relative to the slide 27 and the reciprocal distance between the beams 31 in the direction of the guides 29.

In general, in the present description and in the attached claim, beam or bar means a support extending longitudinally and having a longitudinal dimension greater than the remaining transverse dimensions. The beam may be made of a single piece, or it may be comprised of more components assembled together to form a rigid structure, for example by means of welding, screwing or in any other suitable manner.

With the described configuration, it is possible to move workpieces mounted on the beams 31 as described below relative to the work head 9 and to the tool 21 according to three numerically controlled translation axes X, Y1 (Y2), Z. The movements are imparted partly to the work head 9 (axes X, Z) and partly to the workpieces (axis Y1 or Y2). In further embodiments, the work head 9 may be provided with movements according to three numerically controlled translation axes X, Y, Z, whilst the beams 31 on which the workpiece is blocked may be mounted on a fixed structure instead of on a slide 27 movable along the axis Y1 or Y2, however ensuring the possibility of adjusting the reciprocal distance between the beams 31. An embodiment of this type will be described below.

On each beam 31 guides 33 are provided, along which one or more carriages 35 move. In some embodiments, one or both the guides may be made in a single piece with the beam 31, i.e. made from a single block. In other embodiments, one or both the guides 33 may be attached to the respective beam 31. As shown in the attached drawing, the two guides 33 may be practically arranged on the two longitudinal sides of the respective guide 31, i.e. on the sides extending parallel to the longitudinal extension of the beam.

The guides 33 may be advantageously along the longitudinal sides of the respective beam 31, so as to leave the preferably flat upper surface 31S of the beam 31 completely free. In some embodiments, as shown in the attached drawing, the guides 33 are arranged so as to be distanced from the surface 31S of the respective beam 31. Each carriage 35 may have at least two opposite guiding shoes 34 engaging the guides 33 at opposite sides of the respective beam 31. The guiding shoes 34 may be carried by two side panels 38A, 38B of the carriage (see in particular Figs.2, 8, 11). In some embodiments, the guiding shoes 34 may be made in a single piece with the respective carriage 35, i.e. the guiding shoes 34 and the carriage 35 may be made of a single block. The two side panels 38A, 38B may have different heights. For example, the side panels 38A may extend farther downwards than the side panels 38B.

The upper flat surfaces 31S of the beams are preferably continuous. In the present description and the attached claims, the term "continuous" means that the upper surface has two opposite ends, along the longitudinal extension of the beam, between which the upper surface extends continuously and without interruption, so as to continuously support any piece of equipment fixed on the beam 31. The continuous upper surface 31S has not necessarily constant width. For example, along the extension of the beam on the upper surface 31S thereof holes, notches or the like may be provided for example to form points or elements for coupling blocking pieces of equipment for blocking the workpieces. However, these holes, notches or similar non-uniformities never interrupt completely the extension of the continuous upper surface, i.e. they do not affect the whole width of the upper surface of the beam 31.

A continuous upper surface 31S of this type allows a better fastening of the pieces of equipment, avoiding the risks of bending deformations thereof.

In the illustrated embodiments, four carriages 35 for each beam 31 are provided. It should however be understood that the number of carriages 35 for each beam 31 may be different. For example, one, two three, or more than four carriages 35 for each beam 31 may be provided. The position of each carriage 35 along the respective beam 31 may be adjustable and blockable.

Each of the adjustments mentioned above, i.e. of the position of the beams 31 on the slides 27 and of the carriages 35 on the beams 31, may be manual or servo-assisted. The adjustments are preferably servo-assisted and controlled by means of electronically controlled servo-motors, so that the operator can set the positions and the reciprocal distances of the beams 31 on the slides 27, as well as the positions of the carriages 35 on each beam 31 according to the shape and size of the workpieces to be machined. Examples of positioning are described below. If the machine tool 1 is provided with two or more slides 27, the position of the beams 31 and of the carriages 35 may be different for the slides 27.

In some embodiments a servo-motor for each beam 31 may be provided. In this case, the beams 31 may be positioned along the guides 29 more quickly by moving the beams 31 simultaneously. In other embodiments, a single actuator may selectively move one or the other of the beams 31 of a same workpiece holder 30. To this end an electric motor may be for instance provided, that actuates a drive member, such as a threaded bar or a belt. The beams may be provided with members for selectively coupling to the drive member. The single beams are fastened to the drive member in different time intervals, and therefore they can be moved one after the other by means of the same actuator. Using a single actuator the machine has a lower cost, but requires longer set-up times.

According to the invention, an actuator for each carriage 35 is provided. In this case, the carriages 35 may be positioned along the beams 31 more quickly by moving the carriages 35 simultaneously.

The set comprised of each slide 27 (or other stationary structure carrying the beams 31) and related components carried thereby, including the beams 31 and the carriages 35, constitutes a respective workpiece holder 30 for supporting an blocking the workpieces to be machined by means of the work head 9.

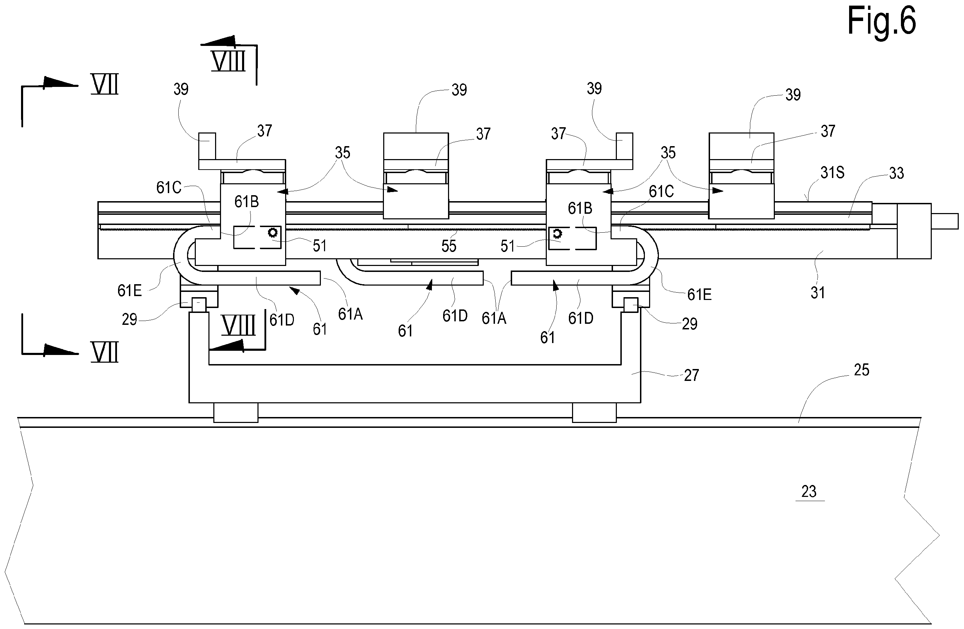

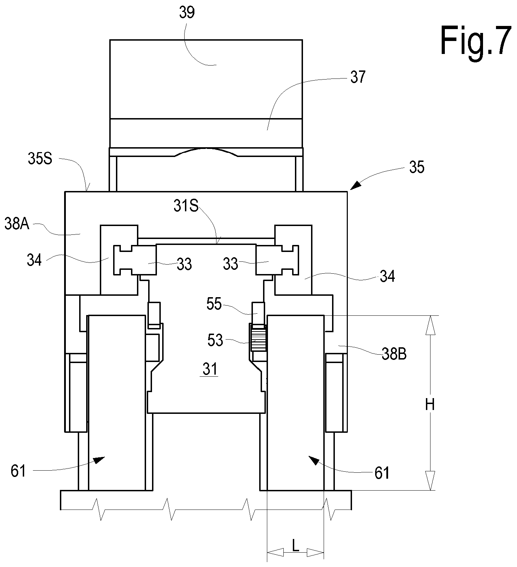

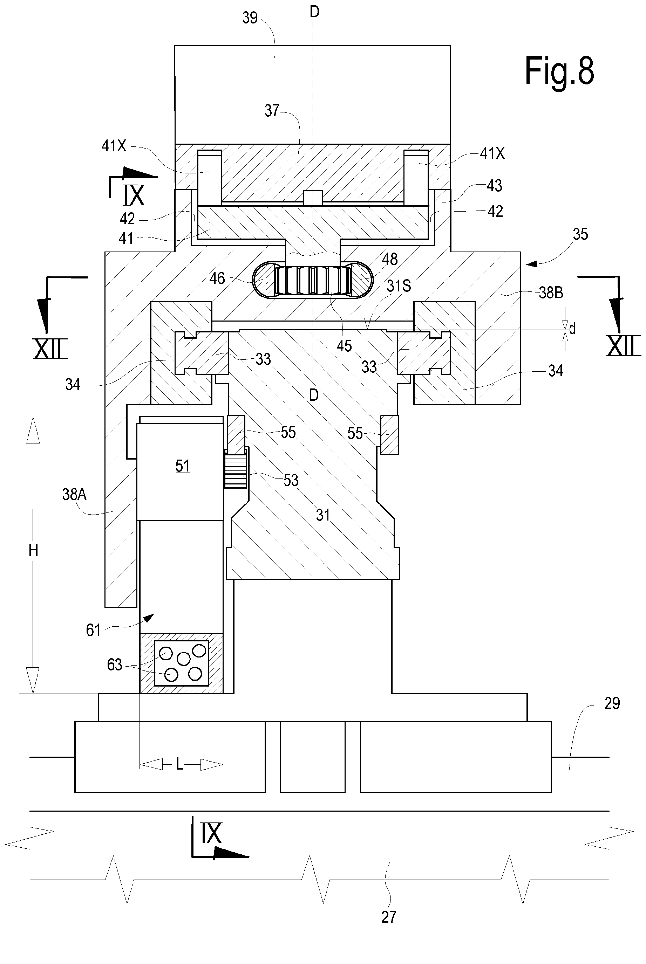

To fasten a workpiece on a workpiece holder 30, each carriage 35 has an upper surface 35S (see in particular Figs. 7 and 8), on which at least one blocking member 37 may be provided. In the illustrated embodiment, each blocking member comprises a suction cup 39, see in particular Figs. 6 and 7.

In the present description and the attached claims the term "suction cup" generically refers to a vacuum blocking means, i.e. wherein the workpiece is blocked by generating a negative pressure in a closed volume, at least partially delimited by the workpiece, which in this way remains adhering the blocking member.

Each suction cup 39 is preferably mounted so as to be eccentric with respect to the respective carriage 35. Each suction cup 39 may be oriented so as to project, with respect to the carriage 35 on which it is mounted, from different sides of the carriage. This is shown in detail in Fig. 3 and the reason thereof will be explained below. Fig.3 shows a top view of the two pairs of beams 31 mounted on the two slides 27. The suction cups 39 of the carriages 35 mounted on the four beams 31 are oriented differently. More in particular, starting from the beam 31 on the left, the arrangement of the suction cups 39 with respect to the carriages 35 is as follows: the first beam 31 carries carriages 35 whose suction cups 39 eccentrically project toward the opposite beam 31, i.e. they are arranged outside the right side (in the figure) of the respective carriage 35; the suction cups 39 of the second beam 31 are arranged outside the left side (in figure) of the respective carriages, i.e. outside the side closest to the beam 31; on the third beam 31, the suction cups 39 of the two carriages 35 closest to the gantry 3 are arranged eccentrically with respect to the carriages 35 and facing each other; on the two carriages 35 farthest from the gantry 3, the respective suction cups are arranged outside the two farthest sides of the carriages, so as to be most spaced from each other; on the fourth beam 31 the suction cups 39 are arranged in the same way as on the third beam.

Fig. 3A schematically shows a carriage 35 and, in broken line, the four possible positions the suction cup 39 can take. The four positions are indicated with N, S, E, W and correspond to the four sides of the carriage 35 that, in this embodiment, has substantially quadrangular flat shape in a top view. Practically, the suction cup 39 may be arranged eccentrically with respect to the carriage outboard any one of the four sides of the carriage.

Using the references listed above, and with reference to Fig.3 again, all the suction cups 39 of the first beam 31 are in position W; all the suction cups 39 of the second beam 31 are in position E; the suction cups 39 of the third and of the fourth beam 31 are arranged in the following sequence, starting from the position closest to the gantry 3 and ending with the farthest one: S, N, N, S.

The suction cups 39 associated with each workpiece holder 30 may be substantially coplanar and thus define a planar blocking surface for the workpieces to be machined. All the suction cups 39 are preferably at the same distance from a floor on which the machine tool 1 is installed, so that the planar workpiece blocking surface is horizontal.

Each blocking member 37 with the respective suction cup 39 may be advantageously mounted on the respective carriage 35 in a rotatable manner around an axis D-D, which is orthogonal to the planar workpiece blocking surface. In some embodiments, each blocking member 37 is mounted so as to rotate by 360° around the axis D-D. However this is not mandatory. In some embodiments, each blocking member 37 may be mounted so as to rotate only by 180°, or only by 90° around the respective axis D-D.

The rotation of the blocking members 37 and of the respective suction cups 39 around the axis D-D with respect to the carriage 35 may be provided by means of a numerically controlled servo-motor, not shown, which is controlled by the central control unit 17. In this case, each suction cup 39 may be can take any angular positions around the axis D-D.

In other embodiments, the rotation is controlled by means of a simpler actuator, that may provide a fixed number of working positions, for example two, three or four working positions, angularly offset by 90° with respect to one another. The adjustment of the angular position may be also provided in a different way for different carriages, for example it may be performed by means of a numerically controlled actuator on some carriages and by means of an actuator with preset multiple positions on other carriages. Moreover, one or more additional suction cups may be provided, mounted in a fixed way or in a manually adjustable way.

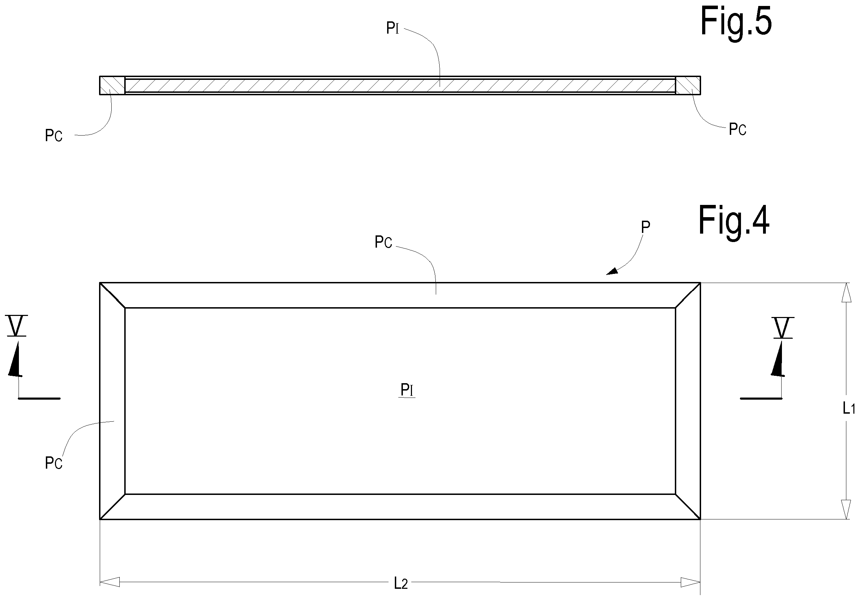

The object of angularly adjusting the suction cups 39 around the axes D-D can be better understood in view of what described below with particular reference to Figs. 3, 4 and 5. In Figs. 4 and 5 a generic workpiece P to be machined is shown. This is usually a flat workpiece, for example a panel or a door of a piece of furniture. The workpiece P may have an inner or central portion or area PI, surrounded by a frame PC. The dimensions L1 and L2 of the workpiece P may be very variable and in some cases the lower dimension L1 may be very small, for example in the order of 10-20 cm. In some cases, the surface that can be gripped by the suction cups 39 may be only the frame PC of the workpiece P.

In Fig.3 just by way of example three workpieces PI, P2, P3 are shown. The workpiece P1 has a greater dimension L2 substantially larger than the lower dimension L1 and such as to require a high number of suction cups 39 to be blocked. In the illustrated example, eight suction cups 39 are used, mounted on the two beams 31 of the workpiece holder 30. As the lower dimension L1 of the workpiece P1 is very reduced, in order to arrange the suction cups 39 along the long sides of the frame PC, the suction cups are oriented in the positions W for the left suction cups and in the positions E for the right suction cups (in the Figure), so as to reduce the distance between suction cups of each pair, keeping the two beams 31 at a suitable distance such that the beams do not interfere with each other.

The workpiece P2 has significantly smaller dimensions than the workpiece PI, and is blocked using the suction cups 39 of two carriages 35 of the left beam 31 and the suction cups 39 of two carriages 35 of the right beam 31 of the respective workpiece holder 30. The other two pairs of carriages 35 are used to block the workpiece P3.

In order to optimize the position of the suction cups on the carriages 35 that support the workpiece P2, the suction cups 39 are arranged in the positions S for the two carriages 35 closest to the gantry 3 and in the positions N for the two carriages 35 farthest from the gantry 3. The blocking of the workpiece P3 occurs by means of complementary positions of the suction cups 39, i.e. with the suction cups closest to the gantry 3 in position N and the suction cups farthest from the gantry 3 in position S. By selecting the positions of the suction cups 29 as described above, it is possible to block the workpieces in an optimal manner, with the suction cups acting on the frames of the workpieces.

As it is clearly understood from Figs.3 and 3A, the position of the suction cups 39 with respect to the carriages 35 may be adjusted so as to carry each suction cup into one of the four positions E, W, N, S that are eccentric with respect to the carriage 35 according to the dimensions L1, L2 of the workpiece P. In case of small batches of workpieces P to be machined, it is necessary quickly to change a set-up of the workpiece holder 30, passing to a new set-up quickly, in order not to significantly affect the duration of the work cycles. To this end, as described above, the blocking members 37 with the respective suction cups 39 are mounted on the respective carriages 35 so that they can rotate by at least 90° between at least two different positions, for example S, W or S, E, or W, N or N, E. Preferably, the rotation is of 180° so that each suction cup 39 can take three of the four positions N, S, E, W with respect to the carriage 35 on which the suction cup is mounted. To have maximum flexibility in setting the workpiece holder 30, each suction cup 39 can take selectively any one of the four positions N, S, E, W, or even any intermediate angular position between the four mentioned positions.

The rotation and fixing of the blocking members 37 may be performed by means of respective numerically controlled electric motors and, if necessary, a brake. In other embodiments, an actuator with two, three or four fixed positions may be used.

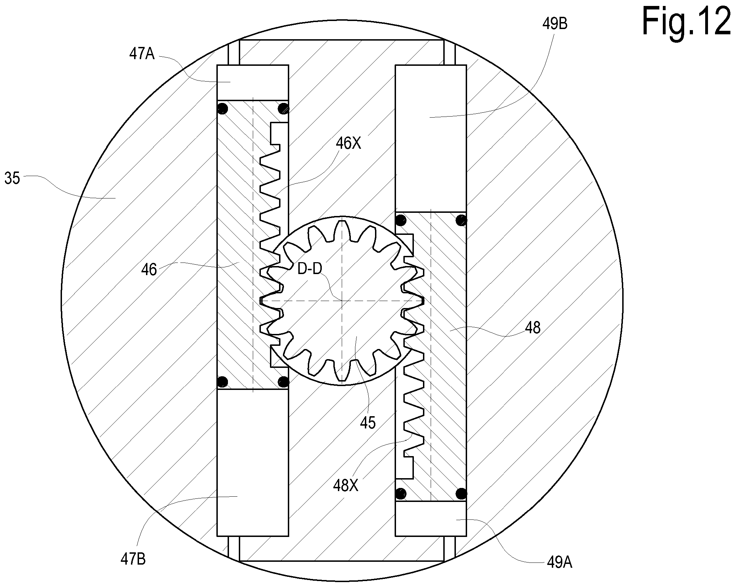

In Figs. 8 and 12 a diagram is shown of a possible mechanism to achieve a 90° rotation of the suction cups 39 with respect to the carriage 35 on which the cups are mounted. In this embodiment, each blocking member 35 is rotatable coupled to a rotor 41 controlling the rotation of the blocking member 37 by 90° around the axis D-D. The rotor 41 may be rotatably housed in a seat 43 of the carriage 35 and may be torsionally coupled to a pinion 45. Two rack segments 46X, 48X co-act with the pinion 45, said segments being provided on two respective cursors 46, 48 that are in turn housed in chambers 47, 49 (see Fig.12). Each chamber 47, 49 is subdivided by the respective cursor 46, 48 into two semi-chambers 47A, 47B and 49A, 49B. By alternatively supplying a pressurized fluid, for example air, into the semi-chambers 47B and 49A, or into the semi-chambers 47A and 49A, it is possible to push the cursors 46, 48 in any one of two opposite positions thus causing the rotation of the respective suction cup 39 around the axis D-D by means of the racks 46X, 48X, which mesh with the pinion 45.

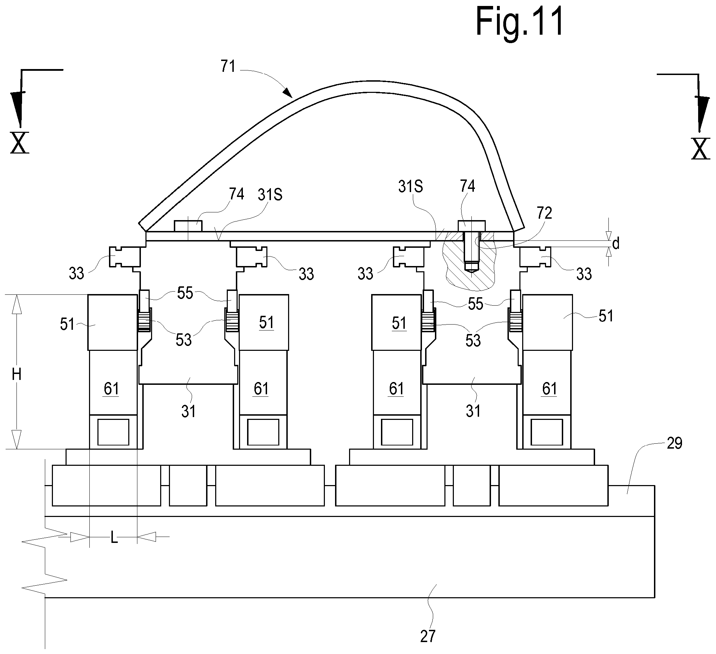

The rotor 41 may be provided with a front coupling 41X for coupling to the blocking member 37 (see Fig.11). Around the rotor 41 a vacuum chamber 42 may be provided, where a negative pressure is generated through a suction pipe (not shown) when the suction cup 39 has achieved the desired angular position. The suction causes the blocking member 37 to be pushed against the seat 43, avoiding the undesired rotation of the rotor 41 and of the blocking member 37 with the respective suction cup 39.

With the control actuators 46, 48 described above it is possible to have a 90° movement of the suction cup 39 between two alternative angular positions. To have four alternative positions it is possible to provide a double structure, with two rotors put over each other and coaxial with each other, each of which is provided with an actuator 46, 48 rotating the respective rotor by 90°.

To avoid bulky construction solutions of this type it is possible to use an electric motor that, by means of a drive, for example a belt or gears, transmits the rotary motion to the suction cup 39 around the axis D-D. The rotation may be a 360° rotation.

However, in some embodiments it could be sufficient that each suction cup 39 rotates only by 90°, for example by means of an actuator of the type shown in Figs. 8 and 12. In this case it is sufficient to mount correctly the single suction cups 39 on the various carriages 35, so that the two alternative positions that the cups may take are sufficient to block all the workpieces that can be machined by the machine tool 1.

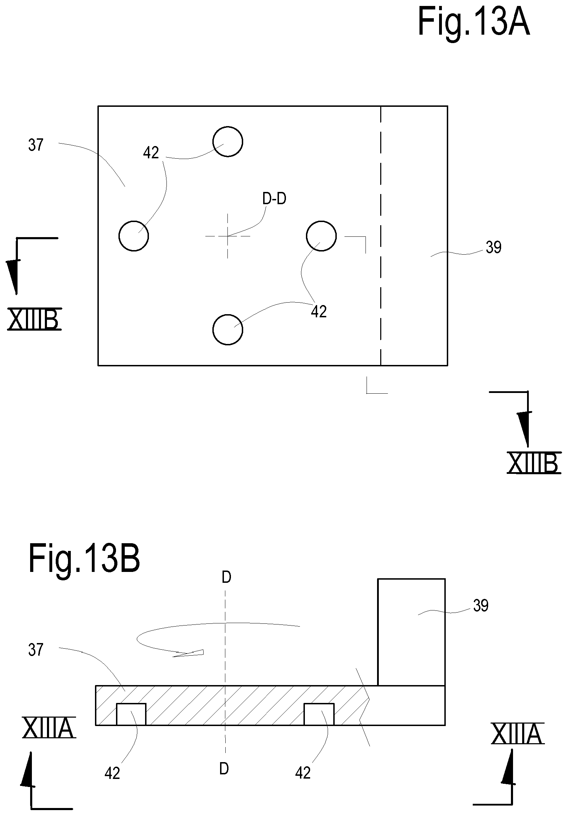

Figs. 13A, 13B respectively show a bottom view according to the line XIII-XIIIA of Fig. 13A and a cross-section according to XIIIB-XIIIB of a blocking member 37 with the respective suction cup 39, configured to take four different positions coupled to a rotor 41 of a carriage 35. As shown in these figures, the blocking member 37 comprises four holes 44 arranged around the axis D-D and able to co-act with pins forming the front coupling 41X of the rotor 41. In this way, the suction cup 39 may be coupled to the rotor 41 in four distinct angular positions, offset by 90° with respect to one another. As the rotor 41 can rotate by 90°, once mounted each suction cup can take two distinct positions, offset by 90°. Based on how the suction cups are mounted on the rotor, different orientations, with respect to the axis D-D, will be possible of the two alternative positions the suction cup can assume when it is rotated by means of the rotor 41.

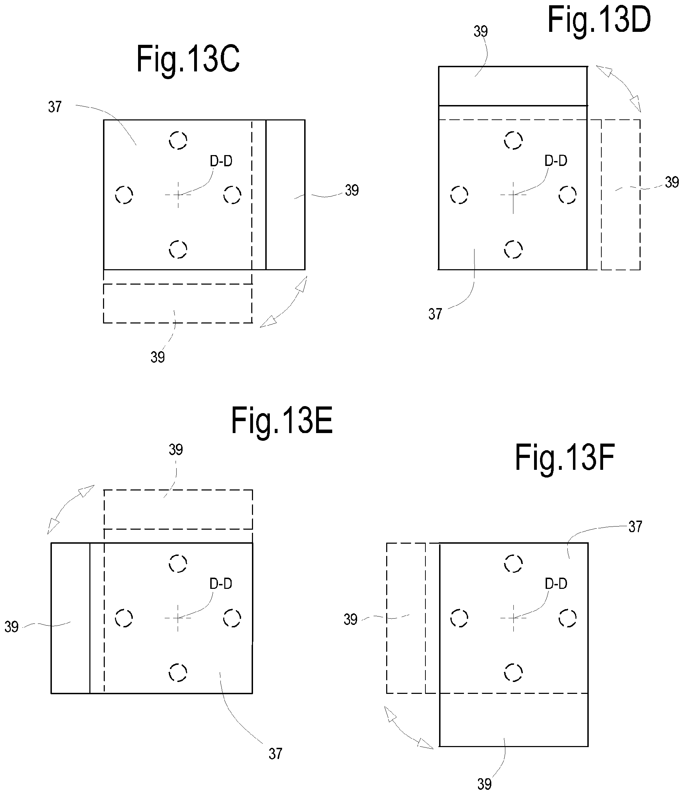

Each of Figs. 13C, 13D, 13E, 13F shows, in solid line, one of the four positions in which the suction cup 39 can be mounted with respect to the rotor carried by the corresponding carriage 35. In broken line is indicated the second position, rotated by 90° with respect to the first position, the suction cup can take due to the rotation imparted to the rotor 41 by means of the actuator 46, 48. By observing for example Figs. 13C-13F and Fig.3, it is easily understood that all the positions of the suction cups 39 of the right workpiece holder 30 can be obtained through a 90° rotation of the suction cups 39 of the left workpiece holder 30, once the initial angular position of each suction cup 39 has been suitably chosen among the four positions shown in continuous line in Figs. 13C-13F.

With this arrangement it is possible to have a very versatile machine, allowing a fast set-up of the position of the suction cups 39, using a very simple actuator 46, 48 that is not expensive and has limited bulk.

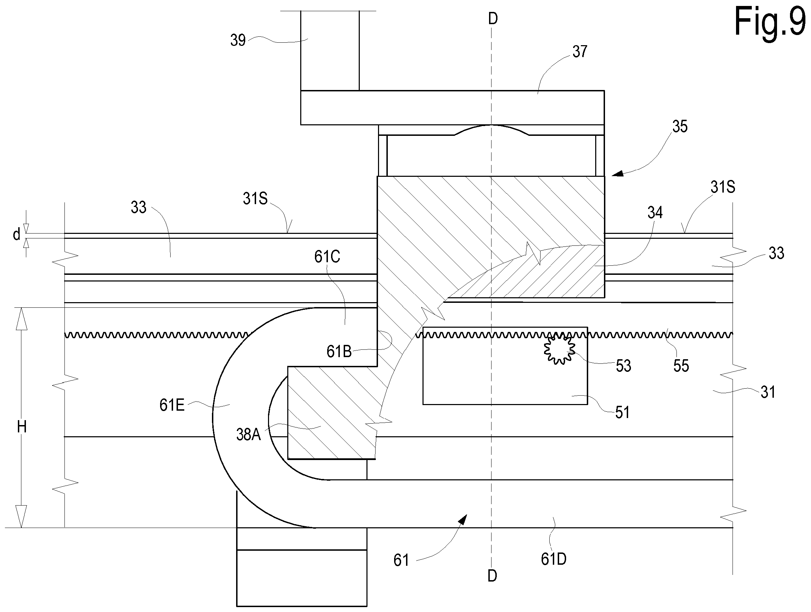

The movement of each carriage 35 along the respective beam 31 may be controlled by means of a servo-motor controlled by the central control unit 17. Details of a possible embodiment of the system for moving the carriages are described below with particular reference to Figs. 6 to 9.

In some embodiments, each carriage 35 may be equipped with an electronically controlled electric actuator 51. The actuator 51 may comprise an electric motor and the related actuation. The actuator 51 may be carried by a side panel of the carriage 35. The actuator is preferably carried by the side panel 38A that has a vertical extension greater than the side panel 38B. The electric motor of each actuator 51 may drive into rotation a pinion 53 meshing with a respective rack 55. One or two carriages are arranged on a beam 31, and they may be mounted with the respective side panels 38A on a side of the beam 31 and the respective pinions 53 of the actuators 51 may mesh with a common rack 55. In case more than two carriages 35 are provided on a beam, for example four carriages 35 as in the illustrated example, the beam is preferably associated with two racks 55 arranged on the two sides of the beam. Each rack 55 meshes with two respective pinions of two carriages 35. The carriages are advantageously arranged alternate, as shown in Fig.6, with adjacent carriages 35 arranged so that the respective actuators 51 and he pinions 53 are arranged on opposite sides of the beam 31.

The rack(s) 55 is(are) preferably arranged below the corresponding guide 33, as shown in particular in Fig.8, and preferably in such a position as to remain, in a top view, underneath the guides 33.

To supply electricity, any hydraulic power or pneumatic power, the suction line for the suction cups 39, and the control signals to each carriage 35 and to the devices associated therewith, pipes and cables may be provided, housed in a guide 61 for each carriage 35. The cables and pipes are schematically indicated with 63 (see Fig.8). The guide 61 is formed by an open flexible member having two ends 61A, 61B. The end 61B is fastened to the respective carriage 35, whilst the end 61A is fastened to a point fixed with respect to the corresponding beam 31. The flexible member forming the guide 61 forms (Fig.6) an upper rectilinear segment 61C, i.e. an upper branch, a lower rectilinear segment 61D, i.e. a lower branch and a curved segment 61E joining together the segments 61C, 61D.

According to embodiments disclosed herein the guide 61 is placed on a side of the relevant beam 31.

As can be appreciated in particular from Figs. 6 to 9, according to embodiments disclosed herein the overall vertical development of the guide 61 is lower than the upper surface 31S of the beam 31. In other words, the guide 61 does not project above the height of surface 31S. Rather, the dimension in the vertical direction is such that the upper surface of the upper branch 61C thereof, remains at a level below the upper surface of the beam 31. This is particularly beneficial as the relevant carriage 35 can thus move along the beam 31 with the guide 61 remaining under the carriage 35.

The radius of curvature of the segment 61E defines, together with the thickness of the guide 61, the overall vertical dimension H of the volume occupied by the guide 61, i.e. the height of the overall transverse cross-section of the guide 61 according to a plane orthogonal to the longitudinal extension of the respective beam 31. The width of the volume occupied by the guide 61 is given by the width L of the same guide (see Figs.7, 8 and 9), i.e. by the dimension of the guide 61 in a direction orthogonal to the longitudinal extension of the beam 31 and orthogonal to the side of the beam 31.

According to the invention, the actuator 51 controlling the carriage 35 is at housed inside the volume with dimensions HxL defined by the guide 61, as shown for example in Fig.8. To reduce the height of the workpiece holder, the actuator 51 is advantageously completely arranged inside the dimension defined by the vertical dimension H. In other words, the position and the vertical bulk of the actuator 51 of each carriage are such that the actuator is integrally housed between the outer (upper and lower) surfaces of the flexible member forming the guide 61.

According to the invention and as illustrated in the drawing, each actuator 51 is completely contained in the section HxL of the guide and has therefore a transverse dimension (orthogonal to the side of the beam 31) equal to, or lower than, the width L of the flexible member or guide 61. In this way the transverse bulk of each carriage 35 and of the respective actuator is reduced, and this allows for example to reduce the minimum distance at which two beams 31 of the same workpiece holder 30 may be arranged.

In advantageous embodiments, the width, in a top view, of the guide 61 and of the actuator 51 is equal to, or lower than, the width of the space available between the side panel 38A of the carriage and the beam 31.

Advantageously, one of the guides 33 of the carriage 35 is above the guide 61 and above the actuator 51.

According to the invention, the overall transverse bulk is reduced of the carriage 35 and of the accessories associated therewith, in particular the actuator 51 and the guide 61, so that the beams 31 of each workpiece holder may be put close to one another at a minimal distance to allow supporting small workpieces.

According to the invention, each carriage 35 has a respective actuator 51 for the positioning along the respective beam 31. In this way, a very quick setting is achieved, as it is possible simultaneously to position all the carriages 35 in the desired position.

In advantageous embodiments, as shown in the attached drawing and mentioned above, each beam 31 has a preferably flat upper surface 31S, devoid of guides, as the guides 33 for the carriages 35 are applied along the sides of the beam 31, flush with the surface 31S or preferably at a given distance below it. In Figs.7 and 8 the distance between the guides 33 and the upper surface 31S of the respective beam is indicated with "d". This distance may be comprised, for example, between 1 mm and 100 mm, preferably between 1 mm and 20 mm, and is determined based on the need of avoiding any contact between the pieces of equipment to be fastened to the surface 31S and the guides 33.

In this way it is possible to apply pieces of equipment of various type to the surfaces 31S, even very bulky pieces of equipment, for fixing non-flat workpieces. In fact, differently from prior art solutions, the upper surface 31S of the beam 31 does not act as a guide nor carries a guide for the carriages 35. Accordingly, on one hand this surface may be provided with members for coupling and fastening equipment for the workpieces and, on the other hand, this surface does not have criticalities as regards any damages resulting from the interference with these pieces of equipment. In fact, the critical surfaces, which shall not be damaged (for example abraded or the like) are represented by the guides 33 that are placed below the upper surface 31S of the beam 31.

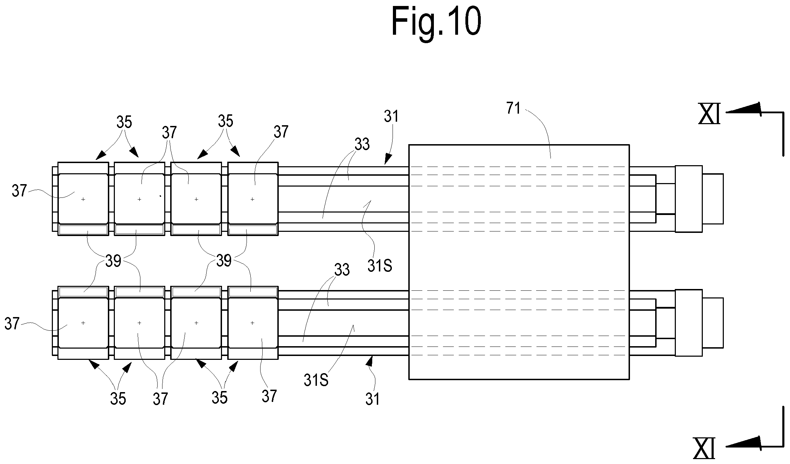

In Figs. 10 and 11 a generic piece of equipment 71 is shown, fixed to the flat upper surfaces 31S of the two beams 31 of a workpiece holder 30. Preferably, in order to leave a greater space for fixing the equipment 71, the carriages 35 of the two beams 31 on which the equipment 71 is fixed may be translated towards an end of the respective beam 31 and put adjacent to one another, as shown in Fig.10. By arranging the guides 33 of the carriages 35 below the level of the surfaces 31S there are no interferences between the guides 33 and the equipment 71. To fix the equipment 71 to the beams 31, the beams may have, on the upper surface, holes 72 for engaging blocking elements 74 (see Fig.11).

Whilst in the figures described above a machine tool 1 is illustrated with pairs of beams 31 that can translate according to a numerically controlled axis Y1, Y2 by means of the respective slides 27 on which they are mounted, in other embodiments all the numerically controlled movements of the tool(s) with respect to the workpiece may be assigned to the work head 9, keeping the workpiece holder 30 formed by the beams 31 and the respective pieces of equipment in a fixed position.

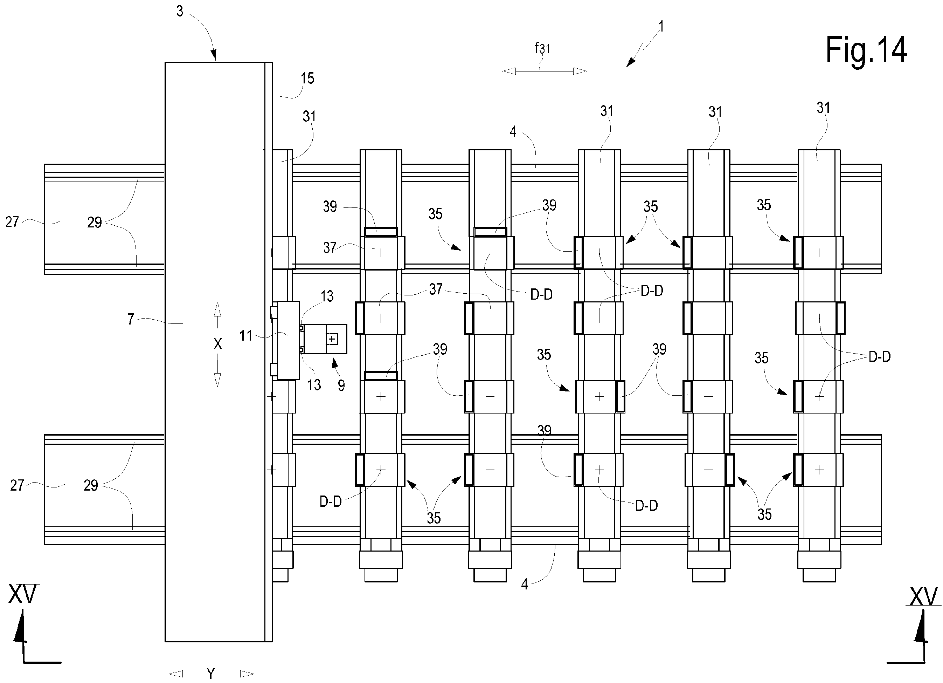

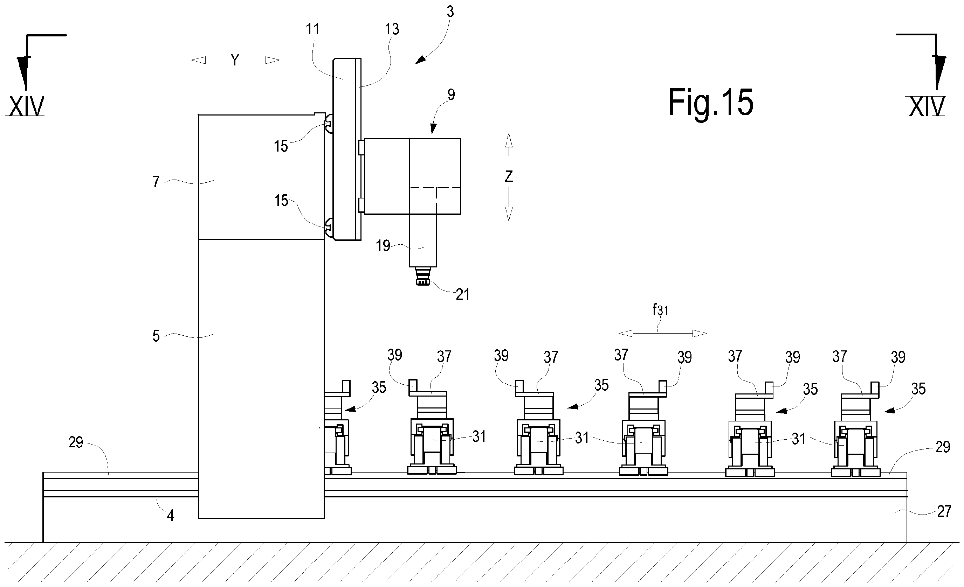

Figs. 14 and 15 show an embodiment of this type. The same numbers indicate equal or equivalent parts to those already described with reference to the previous embodiments. The machine tool 1 has a gantry structure 3 movable according to a numerically controlled translation axis Y, along guides 4 fixed to the floor or fastened to a structure 27, on which also the beams 31 are mounted. The gantry structure 3 has uprights 5 and a crossbar 7. The work head, indicated again with number 9, is movable along guides 15 fixed to the crossbar 7.

In other embodiments, instead of a gantry structure a movable column structure may be provided, i.e. a structure with a single upright 5, to which the crossbar 7 is attached.

The work head 9 is movable along a vertical numerically controlled translation axis Z and along a horizontal numerically controlled translation axis X by means of the guides 15.

In this embodiment, the beams 31 are not mounted on slides movable along bases fixed with respect to the gantry structure. Differently from the embodiments describe above, in this configuration the beams 31 are carried by a bearing structure, indicated again with number 27, with which guides 29 are integral, along which the beams 31 are adjustable. In the illustrated embodiment, an exemplary number of beams 31 has been shown. The number of beams 31 may be different from that illustrated.

Each beam may be movable according to the double arrow f31 so as to be positioned in the required position according to the specific machining of a given workpiece or batch of workpieces. As in the case described above with reference to Figs. 1 to 13, each beam 31 may be movable along the guides 29 by means of a respective actuator (not shown). Alternatively, there may be provided a number of actuators smaller than the number of beams, for example even only one actuator. A drive member, for example a belt or an endless chain, may selectively transmit motion from the actuator to each one of the beams 31, members being provided, which selectively engage one or the other of the beams 31 to the drive member, to selectively move each beam (or more beams) by means of the same actuator.

Carriages 35 are arranged on the beams 31, in the same way as already described above, with blocking members 37 having suction cups 39 for blocking the workpieces. The suction cups 39 may define one or more planar working surfaces that are substantially horizontal, i.e. parallel to the numerically controlled axes X, Y.

In the machine of Figs. 14 and 15 all the numerically controlled movements between tool and workpiece are assigned to the work head 9, whilst the beams 31 are only provided with adjustment movements.

In the case of Figs. 14 and 15, the beams 31 and the carriages with the respective pieces of equipment mounted thereon may be substantially the same as those of the embodiments described above.

In further embodiments, the work head 9 may be movable according to a plurality of numerically controlled axes (translation and, if necessary, rotation axes), whilst the beams 31 may be simply movable from a workpiece load position to a work position and from here to an unload position, that can be the same as the work position. This movement can be a movement not numerically controlled, and may provide, for instance, for only two or three fixed positions. In the embodiment of Figs. 1 to 3 it is for example possible to assign the head a movement according to a third numerically controlled translation axis parallel to the axes Y1, Y2 and to move the slides 27 along the guides 25 with no numerical control, but only between two end positions: a position below or near the gantry 3 and a position far from the gantry 3, for loading and unloading the workpieces.

## Claims

1. A machine tool (1) comprising:
- at least one work head (9) adapted to support at least one tool (21);
- at least one workpiece holder (30) comprising at least two substantially parallel beams (31) arranged at a distance adjustable orthogonally to the longitudinal extension of the beams;
- on each beam (31) at least one carriage (35) movable along the longitudinal extension of the beam (31) and provided with a respective actuator (51) controlling the movement of the carriage (35) along the respective beam (31), the actuator (51) being integrally movable with the carriage (35);
wherein to each carriage (35) a flexible member (61) is associated, forming a guide (61) that contains cables (63) for powering the actuator (51), the flexible member having two branches (61C, 61D); **characterized in that**: the flexible member (61) is arranged on an outer side of the beam (31); the two branches (61C, 61D) of the flexible member (61) are put over each other, such that the flexible member (61) is contained in a volume whose vertical dimension (H) is defined by the outer parallel surfaces of the upper branch (61C) and lower branch (61D) of the flexible member (61), respectively, and whose width (L) is defined by the size of the flexible member (61) in a direction orthogonal to the longitudinal extension of the respective beam (31); the actuator (51) of each carriage (35) is arranged between the two overlying branches of the flexible member such as to be completely contained within said vertical dimension (H) defined by the upper surface of the upper branch (61C) and the lower surface of the lower branch (61D) of the flexible member (61); and in a top view each actuator (51) and the respective flexible member (61) are at least partially overlapped.

2. The machine tool (1) of claim 1, wherein in a top view the actuator (51) is integrally contained in the width of the flexible member (61).

3. The machine tool (1) of claim 1 or 2, wherein each carriage (35) comprises an upper surface (35S) for mounting workpiece blocking members (37), the upper surface (35S) being arranged at a height higher than the respective beam (31), and wherein in a top view the actuator (51) is at least partially contained, and preferably completely contained, inside the footprint of the upper surface (35S) of the carriage (35) and is arranged at a lower height than said upper surface (35S).

4. The machine tool (1) of claim 3, wherein each carriage (35) comprises a first side panel (38A) extending from the upper surface (35S) laterally with respect to the respective beam (31), and wherein the flexible member (61) has such a width (L) as to be contained between the beam (31) and the first side panel (38A) of the carriage (35).

5. The machine tool (1) of claim 4, wherein each actuator (51) is mounted on the first side panel (38A) of the respective carriage (35).

6. The machine tool (1) of claim 5, wherein on each carriage a first carriage guiding shoe (34) is arranged between the upper surface (35S), the actuator (51) and the first side panel (38A) of the carriage (35), which first shoe engages a respective first guide (33) of the carriage (35) fastened to the respective beam (31).

7. The machine tool (1) of claim 6, wherein each carriage (35) comprises a second side panel (38B) opposite to the first side panel (38A), the beam (31) extending between the first side panel (38A) and the second side panel (38B), and wherein to the second side panel (38B) a second guiding shoe (34) for the carriage (35) is fastened, engaging a second guide (33) of the carriage (35) fastened to the beam (31) on a side opposite the first guide (33) of the carriage.

8. The machine tool (1) of one or more of the previous claims, wherein each actuator (51) comprises a pinion (53) meshing with a first rack (55) integral with the beam (31).

9. The machine tool (1) of claim 8 when depending at least on claim 6, wherein the first rack (55) is mounted below the first guide (33) of the carriage (35).

10. The machine tool (1) of claim 7 or 9, wherein each beam (31) comprises a second rack (55) integral with the beam (31) and mounted below the second guide (33) of the carriage (35); and wherein on each beam (31) more than two carriages (35) are arranged, mounted such that some pinions (53) of the respective actuators (51) mesh with the first rack (55) and some pinions (53) mesh with the second rack (55), some first side panels (38A) of the carriages (35) being arranged on a side, and some first side panels (38B) of the carriages (35) being arranged on the opposite side of the respective beam (31).

11. The machine tool (1) of any one of the preceding claims, wherein the lower branch (61D) of the guide terminates with an end (61A) which is fixed with respect to the relevant beam (31), and the upper branch (61C) terminates with an end (61B) which is attached to the relevant carriage (35).

12. The machine tool (1) of any one of the preceding claims, wherein the two branches (61C, 61D) of the guide (61) are located both in a position lower than the upper surface (31S) of the relevant beam (31).

## Patentansprüche

1. Werkzeugmaschine (1) mit:
- mindestens einem Werkzeugkopf (9), der ausgebildet ist, um zumindest ein Werkzeug (21) zu tragen,
- mindestens einem Werkzeug-Halter (30) mit mindestens zwei im Wesentlichen parallelen Trägern (21), die in einem Abstand angeordnet sind, der orthogonal zu der Längsausdehnung der Träger einstellbar ist,
- auf jedem Träger (31) mindestens einem Wagen (35), der entlang der Längsausdehnung des Trägers (31) bewegbar ist und mit einem jeweiligen Aktuator (51) versehen ist, der die Bewegung des Wagens (35) entlang des jeweiligen Trägers (31) steuert, wobei der Aktuator (51) integral mit dem Wagen (35) bewegbar ist,
wobei jedem Wagen (35) ein flexibles Element (61) zugeordnet ist, das eine Führung (61) bildet, die Kabel (63) zum Speisen des Aktuators (51) enthält, wobei das flexible Element zwei Zweige (61C, 61D) aufweist, **dadurch gekennzeichnet, dass**: das flexible Element (61) an einer Außenseite des Trägers (31) angeordnet ist, die beiden Zweige (61C, 61D) des flexiblen Elements (61) übereinander so angeordnet sind, dass das flexible Element (61) in einem Volumen enthalten ist, dessen vertikale Abmessung (H) durch die äußeren parallelen Flächen des oberen Zweigs (61C) bzw. des unteren Zweigs (61D) des flexiblen Elements (61) definiert sind, und dessen Breite (L) durch die Größe des flexiblen Elements (61) in einer Richtung orthogonal zu der Längsausdehnung des jeweiligen Trägers (31) definiert ist, wobei der Aktuator (51) jedes Wagens (35) zwischen den beiden überliegenden Zweigen des flexiblen Elements angeordnet ist, um so vollständig innerhalb der vertikalen Abmessung (H), die durch die obere Fläche des oberen Zweigs (61C) und die untere Fläche des unteren Zweigs (61D) des flexiblen Elements (61) definiert ist, enthalten zu sein, und wobei in einer Draufsicht jeder Aktuator (51) und das jeweilige flexible Element (61) zumindest teilweise überlappen.

2. Werkzeugmaschine (1) nach Anspruch 1, wobei in einer Draufsicht der Aktuator (51) integral in der Breite des flexiblen Elements (61) enthalten ist.

3. Werkzeugmaschine (1) nach Anspruch 1 oder 2, wobei jeder Wagen (35) eine obere Fläche (35S) zur Montage eines Werkstück-Blockierelements (37) aufweist, wobei die obere Fläche (35S) in einer höheren Höhe als der jeweilige Träger (31) angeordnet ist und wobei in einer Draufsicht der Träger (51) teilweise und vorzugsweise vollständig innerhalb des Umrisse der oberen Fläche (35S) des Wagens (35) enthalten ist und in einer geringeren Höhe als die obere Fläche (35S) angeordnet ist.

4. Werkzeugmaschine (1) nach Anspruch 3, wobei jeder Wagen (35) eine erste Seitenplatte (38A) aufweist, die sich von der oberen Fläche (35S) seitlich mit Bezug auf den jeweiligen Träger (31) erstreckt, und wobei das flexible Element (61) eine solche Breite (L) aufweist, die zwischen dem Träger (31) und der ersten Seitenplatte (38A) des Wagens (35) enthalten ist.

5. Werkzeugmaschine nach Anspruch 4, wobei jeder Aktuator (51) an der ersten Seitenplatte (38A) des jeweiligen Wagens (35) montiert ist.

6. Werkzeugmaschine nach Anspruch 5, wobei auf jedem Wagen ein erster Wagen-Führungsschuh (34) zwischen der oberen Fläche (35S), dem Aktuator (51) und der ersten Seitenplatte (38A) des Wagens (35) angeordnet ist, wobei der erste Schuh an einer jeweiligen ersten Führung (33) des Wagens (35) angreift, die an dem jeweiligen Träger (31) befestigt ist.

7. Werkzeugmaschine (1) nach Anspruch 6, wobei jeder Wagen (35) eine zweite Seitenplatte (38B) gegenüber der ersten Seitenplatte (38A) aufweist, wobei sich der Träger (31) zwischen der ersten Seitenplatte (38A) und der zweiten Seitenplatte (38B) erstreckt und wobei an der zweiten Seitenplatte (38B) ein zweiter Führungsschuh (34) für den Wagen (35) befestigt ist, der an einer zweiten Führung (33) des Wagens (35) angreift, die an dem Träger (31) an einer Seite gegenüberliegend der ersten Führung (33) des Wagens befestigt ist.

8. Werkzeugmaschine nach einem oder mehreren der vorstehenden Ansprüche, wobei jeder Aktuator (51) ein Ritzel (53) aufweist, das mit einer ersten Zahnstange (55) kämmt, die integral mit dem Träger (31) ist.

9. Werkzeugmaschine nach Anspruch 8, wenn mindestens von Anspruch 6 abhängig, wobei die erste Zahnstange (55) unterhalb der ersten Führung (33) des Wagens (35) montiert ist.

10. Werkzeugmaschine (1) nach Anspruch 7 oder 9, wobei jeder Träger (31) eine zweite Zahnstange (55) aufweist, die integral mit dem Träger (31) ist und unterhalb der zweiten Führung (33) des Wagens (35) montiert ist, und wobei auf jedem Träger (31) mehr als zwei Wagen (35) angeordnet sind, die so montiert sind, dass einige Ritzel (53) der jeweiligen Aktuatoren (51) mit der ersten Zahnstange (55) kämmen und einige Ritzel (53) mit der zweiten Zahnstange (55) kämmen, wobei einige der ersten Seitenplatten (38A) der Wagen (35) an einer Seite und einige erste Seitenplatten (38B) der Wagen (35) an der gegenüberliegenden Seite des jeweiligen Trägers (31) angeordnet sind.

11. Werkzeugmaschine (1) nach einem der vorstehenden Ansprüche, wobei der untere Zweig (61D) der Führung an einem Ende (61A) endet, das mit Bezug auf den jeweiligen Träger (31) fixiert ist, und der obere Zweig (61C) an einem Ende (61B) endet, das an dem jeweiligen Wagen (35) befestigt ist.

12. Werkzeugmaschine (1) nach einem der vorstehenden Ansprüche, wobei die beiden Zweige (61C, 61D) der Führung (61) beide in einer Position tiefer als die obere Fläche (31S) des jeweiligen Trägers (31) angeordnet sind.

## Revendications

1. Une machine-outil (1) comprenant :
- au moins une tête d'usinage (9) apte à supporter au moins un outil (21) ;
- au moins un support de pièce à usiner (30) comprenant au moins deux poutrelles sensiblement parallèles (31) agencées à une distance réglable perpendiculairement à l'extension longitudinal des poutrelles ;
- sur chaque poutrelle (31) au moins un chariot (35) déplaçable le long de l'extension longitudinale de la poutrelle (31) et pourvu d'un actionneur respectif (51) commandant le mouvement du chariot (35) selon de la poutrelle respective (31), l'actionneur (51) pouvant être déplacé solidairement avec le chariot (35) ;
dans lequel un organe souple (61) est associé à chaque chariot (35), formant un guide (61) qui contient des câbles (63) pour alimenter en énergie l'actionneur (51), l'organe souple ayant deux branches (61C, 61D) ; **caractérisé en ce que** : l'organe souple (61) est agencé d'un côté extérieur de la poutrelle (31) ; les deux branches (61C, 61D) de l'organe souple (61) sont disposées l'une sur l'autre, de sorte que l'organe souple (61) soit contenu dans un volume dont la dimension verticale (H) est définie par les surfaces parallèles externes de la branche supérieure (61C) et la branche inférieure (61D) de l'organe souple (61), respectivement, et dont la largeur (L) est définie par la taille de l'organe souple (61) dans une direction perpendiculaire à l'extension longitudinale de la poutrelle respective (31) ; l'actionneur (51) de chaque chariot (35) étant agencé entre les deux branches superposées de l'organe souple de façon à être complètement contenu à l'intérieur de ladite dimension verticale (H) définie par la surface supérieure de la branche supérieure (61C) et la surface inférieure de la branche inférieure (61D) de l'organe souple (61) ; et en vue de dessus, chaque actionneur (51) et l'organe souple respectif (61) se superposant au moins partiellement.

2. La machine-outil (1) selon la revendication 1, dans laquelle, en vue de dessus, l'actionneur (51) est intégralement contenu dans la largeur de l'organe souple (61).

3. La machine-outil (1) selon la revendication 1 ou 2, dans laquelle chaque chariot (35) comprend une surface supérieure (35S) pour monter des organes de blocage de pièce à usiner (37), la surface supérieure (35S) étant agencée à une hauteur supérieure à celle de la poutrelle respective (31) et dans laquelle en vue de dessus l'actionneur (51) est au moins partiellement contenu, et de préférence, complètement contenu, à l'intérieur de la projection de la surface supérieure (35S) du chariot (35) et est agencé à une hauteur inférieur à celle de la surface supérieure (35S).

4. La machine-outil (1) selon la revendication 3, dans laquelle chaque chariot (35) comprend un premier panneau latéral (38A) s'étendant depuis la surface supérieure (35S) latéralement par rapport à la poutrelle respective (31), et dans laquelle l'organe souple (61) a une largeur (L) telle qu'il est contenu entre la poutrelle (31) et la premier panneau latéral (38A) du chariot (35).

5. La machine-outil (1) selon la revendication 4, dans laquelle chaque actionneur (51) est monté sur le panneau latéral (38A) du chariot respectif (35).

6. La machine-outil (1) selon la revendication 5, dans laquelle sur chaque chariot, un premier coulisseau de guidage de chariot (34) est agencé entre la surface supérieure (35S), l'actionneur (51) et le premier panneau latéral (38A) du chariot (35), lequel premier coulisseau vient en prise avec un premier guide (33) respectif du chariot (35) fixé à la poutrelle respective (31).

7. La machine-outil (1) selon la revendication 6, dans laquelle chaque chariot (35) comprend un deuxième panneau latéral (38B) opposé au premier panneau latéral (38A), la poutrelle (31) s'étendant entre le premier panneau latéral (38A) et le deuxième panneau latéral (38B), et dans laquelle un deuxième coulisseau de guidage (34) pour le chariot (35) est fixé au deuxième panneau latéral (38B), venant en prise avec un deuxième guide (33) du chariot (35) fixé à la poutrelle (31) d'un côté opposé au premier guide (33) pour le chariot.

8. La machine-outil (1) selon l'une ou plusieurs des revendications précédents, dans laquelle chaque actionneur (51) comprend un pignon (53) engrenant avec une première crémaillère (55) d'un seul tenant avec la poutrelle (31).

9. La machine-outil (1) selon la revendication 8, lorsque celle-ci dépend au moins de la revendication 6, dans laquelle la première crémaillère (55) est montée sous le premier guide (33) du chariot (35).

10. La machine-outil (1) selon la revendication 7 ou 9, dans laquelle chaque poutrelle (31) comprend une deuxième crémaillère (55) d'un seul tenant avec la poutrelle (31) et montée sous le deuxième guide (33) du chariot (35) ; et dans laquelle sur chaque poutrelle (31) plus de deux chariots (35) sont agencés, montés de telle sorte que certains pignons (53) des actionneurs (51) respectifs engrènent avec la première crémaillère (55) et certains pignons (53) engrènent avec la deuxième crémaillère (55), certains premiers panneaux latéraux (38A) des chariots (35) étant agencés d'un côté et certains premiers panneaux latéraux (38B) des chariots (35) étant agencés sur le côté opposé de la poutrelle respective (31).

11. La machine-outil (1) selon l'une quelconque des revendications précédentes, dans laquelle la branche inférieure (61D) du guide se termine avec une extrémité (61A) qui est fixée sur la poutrelle correspondante (31) et la branche supérieure (61C) se termine avec une extrémité (61B) qui est fixée au chariot correspondant (35).

12. La machine-outil (1) selon l'une quelconque des revendications précédentes, dans laquelle les deux branches (61C, 61D) du guide (61) sont situées toutes les deux à un endroit situé plus bas que la surface supérieure (31S) de la poutrelle correspondante (31).
